(19) Europäisches Patentamt
European Patent Office
Office européen des brevets

(11) Veröffentlichungsnummer: **0 008 648**
**B1**

(12) **EUROPÄISCHE PATENTSCHRIFT**

(45) Veröffentlichungstag der Patentschrift: **28.04.82**

(51) Int. Cl.³: **C 07 F 9/12**

(21) Anmeldenummer: **79102517.4**

(22) Anmeldetag: **18.07.79**

# (54) Verfahren zur Herstellung von Phosphorsäure-triestern und nach diesem Verfahren hergestellte Verbindungen.

(30) Priorität: **29.07.78 DE 2833341**

(43) Veröffentlichungstag der Anmeldung:
**19.03.80 Patentblatt 80/6**

(45) Bekanntmachung des Hinweises auf die Patenterteilung:
**28.04.82 Patentblatt 82/17**

(84) Benannte Vertragsstaaten:
**BE DE FR GB IT NL**

(56) Entgegenhaltungen:
**DE - A - 2 162 344**
**DE - C - 1 149 354**

(73) Patentinhaber: **BAYER AG**
**Zentralbereich Patente, Marken und Lizenzen**
**D-5090 Leverkusen 1, Bayerwerk (DE)**

(72) Erfinder: **Selbeck, Harald, Dr.**
**Doerperhofstrasse 39**
**D-4150 Krefeld (DE)**
Erfinder: **Wulff, Claus, Dr.**
**Kaiser Strasse 248**
**D-4150 Krefeld (DE)**
Erfinder: **Hucks, Uwe, Ing.**
**Am Marienstift 30**
**D-4234 Alpen (DE)**
Erfinder: **Tresper, Erhard, Dr.**
**Dahlerdyk 154**
**D-4150 Krefeld 1 (DE)**
Erfinder: **Vernaleken, Hugo, Dr.**
**Kreuzbergstrasse 147**
**D-4150 Krefeld (DE)**

**EP 0 008 648 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von Phosphorsäure-triestern und nach diesem Verfahren hergestellte Verbindungen

Phosphorsäureester aliphatischer Alkohole und aromatischer Hydroxyverbindungen finden großtechnisch Anwendung als Weichmacher, Schmiermittel und hydraulische Flüssigkeiten. Die Herstellung derartiger Phosphorsäureester ist im Prinzip bekannt und wurde in der Literatur ausführlich beschrieben (vgl. u.a. Houben-Weyl, Band 12/2, Georg Thieme Verlag). Die in der Praxis ausgeführten Verfahren weisen jedoch entscheidende Nachteile auf. Wie einer Vielzahl von Patentanmeldungen (z.B. DE—OS 1 960 526, DE—OS 2 532 795, US—PS 3 723 315) zu entnehmen ist, werden die Phosphorsäureester heute technisch meist so hergestellt, daß die aliphatischen Alkohole bzw. die aromatischen Hydroxyverbindungen mit Phosphoroxychlorid bei erhöhter Temperatur in Gegenwart eines Katalysators zum Phosphorsäureester umgesetzt werden. Dazu sind Reaktionstemperaturen von 160 bis 250°C erforderlich. Durch die hohe Temperaturbelastung kommt es zu einer Verfärbung des Reaktionsproduktes, so daß eine nachfolgende Destillation der Phosphorsäureester unumgänglich wird, wenn Produkte mit heller Farbe verlangt werden. Hinzu kommt. daß durch die hohe Reaktionstemperatur auch Nebenprodukte entstehen, die destillativ abgetrennt werden müssen. Ein gravierender Nachteil dieses Verfahrens ist auch das Freiwerden gasförmigen Chlorwasserstoffs, der zu Korrosionsproblemen in den technischen Anlagen führt. Nachteilig ist außerdem, daß zur Erreichung einer hohen Ausbeute an Phosphorsäuretriestern die Alkoholkomponenten bzw. die aromatischen Hydroxyverbindungen im Überschuß eingesetzt werden müssen.

Aus der DE—PS 1 149 354 ist ein Verfahren zur Herstellung von Phosphonsäureestern bekannt, bei dem Alkylphosphonsäurehalogenide mit Phenolen in Gegenwart von Säurebindemitteln oder in Form der entsprechenden Phenolate bei schwach bis mäßig erhöhter Temperatur umgesetzt werden, und das Reaktionsgemisch nach Vereinigung der Ausgangskomponenten zwecks Vervollständigung der Umsetzung noch einige Zeit unter Rühren erwärmt wird. Das Verfahren hat den Nachteil, daß es nur verhältnismäßig niedere Ausbeuten von unter 80% an Phosphonsäureester liefert.

Aus der DE—OS 2 162 344 ist ein Verfahren zur Herstellung von Alkylphenylestern von Phosphorsäuren bekannt, bei dem Phenole oder Phenolate beispielsweise mit Chlorphosphorsäurealkylestern umgesetzt werden. Wesentlich für die Umsetzung ist, daß sie in einem Reaktionsmedium durchgeführt wird, das aus einem sauerstoffenthaltenden Lösungsmittel, einem Amin und einer basischen Metallverbindung besteht. Es ist außerdem ein Nachteil des Verfahrens, daß es auf die Umsetzung von Phosphormonohalogenverbindungen beschränkt ist.

Bei einem anderen Verfahren (W. ter Horst, US—PS 1 837 176) werden Phenol bzw. Kresol mit Phosphoroxychlorid in Gegenwart wäßriger Natronlauge und geringer Mengen organischer Lösungsmittel umgesetzt. Auch bei diesem Verfahren ist die Temperaturführung sehr ungünstig, da die Reaktionstemperatur auf 0 bis 3°C gehalten werden muß, um einigermaßen befriedigende Ausbeuten zu erhalten.

Das zuletzt beschriebene Verfahren ist im Prinzip nicht neu, sondern es stellt lediglich eine Ausführung der Reaktion von Schotten-Baumann dar. Mit Hilfe der Reaktion von Schotten-Baumann wurden bereits von W. Autenrieth (Chem. Ber. *30*, 2369 (1897)) Phosphorsäureester, insbesondere der Phenole, Kresole und Naphthole gewonnen, indem die aromatischen Hydroxyverbindungen mit Phosphoroxychlorid in Gegenwart 10%iger Natronlauge umgesetzt wurden.

Die Verfahren von Autenrieth und ter Horst sind für eine technische Nutzung nur wenig geeignet, da sie lediglich zu Ausbeuten von 60 bis 75% an Phosphorsäuretriestern führen (s. Vergleichsbeispiele 1 bis 3). Die technische Schwierigkeit, hohe Ausbeuten an Phosphorsäuretriestern nach der Reaktion von Schotten-Baumann zu erhalten, liegt darin begründet, daß das meist verwendete Phosphoroxychlorid durch die wäßrige Natronlauge partiell oder vollständig hydrolysiert wird und die dann gebildeten Natriumsalze der entsprechenden Hydroxyverbindungen unter den gewählten Versuchsbedingungen nicht mit den aromatischen Hydroxyverbindungen zum Phosphorsäureester weiterreagieren.

Überraschenderweise wurde nun dennoch ein Verfahren gefunden, mit dem unter Ausnutzung der Reaktion von Schotten-Baumann Ausbeuten an Phosphorsäuretriestern erhalten werden, die in den meisten Fällen bei 92 bis 99% der Theorie liegen. Dies ist umso überraschender, als eine bevorzugte Ausführungsart des Verfahrens vorsieht, daß die Reaktionskomponenten unter hoher Turbulenz vermischt werden, wobei das als Phosphorhalogenverbindung meist verwendete Phosphoroxychlorid in engem Kontakt mit der wäßrig alkalischen Phase steht.

Gemäß dem erfindungsgemäßen Verfahren werden in einer zwei- oder mehrstufigen Reaktion aromatische Hydroxyverbindungen mit Phosphoroxyhalogeniden, Phosphoropentahalogeniden, Phosphorsäuremonoesterdihalogeniden und Phosphorsäurediestermonohalogeniden in Gegenwart wäßriger Metallhydroxid-lösungen und ausreichender Mengen organischer Lösungsmittel zu Phosphorsäuretriestern umgesetzt. Bevorzugt wird das erfindungsgemäße Verfahren auf die Reaktion aromatischer Hydroxyverbindungen mit Phosphoroxychlorid in Gegenwart wäßriger Alkalilauge und organischer, mit Wasser nicht mischbarer Lösungsmittel angewandt. Der pH-Wert wird im Verlauf der Reaktion bevorzugt zwischen pH 7,5 bis 13,5 gehalten. Dadurch werden im Gegensatz zum praxisüblichen Verfahren durch freien Chlorwasserstoff verursachte Korrosionsprobleme vermieden.

Gegenstand der Erfindung ist somit ein Verfahren zur Herstellung von Phosphorsäuretriestern der allgemeinen Formel (I)

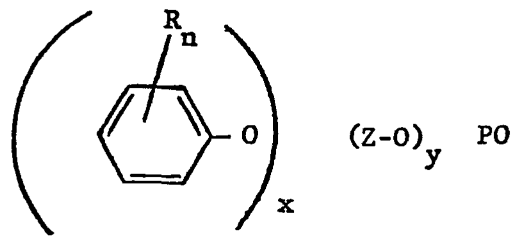

(I)

in der

R für ein Wasserstoffatom, einen Alkylrest mit 1—20, bevorzugt 1—12 Kohlenstoffatomen, einen Alkoxyrest mit 1—20, bevorzugt 1—4 Kohlenstoffatomen, einen Phenoxyrest, einen Phenylrest der gegebenenfalls anneliert ist, einen Rest —$COOR_1$, in dem $R_1$ eine Alkylgruppe mit 1—20 Kohlenstoffatomen darstellt, eine Nitrilgruppe oder ein Halogenatom (Cl, Br, F) steht,

n für eine ganze Zahl zwischen 1 und 5 steht und die Reste R gleich oder verschieden sein können,

x für eine ganze Zahl zwischen 1 und 3 steht,

Z für einen Alkylrest mit 1—20 Kohlenstoffatomen oder einen Rest der Formel

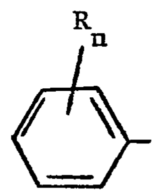

worin

R und die obige Bedeutung aufweisen

und

y für 3—x steht,

durch Umsetzung von Phosphoroxyhalogeniden, Phosphorpentahalogeniden, Phosphorsäuremonoesterdihalogeniden oder Phosphorsäurediesterhalogeniden der Formel (II) bzw. (III)

$$ZO\,PO\,Hal_2 \qquad (ZO)_2PO\,Hal$$

(II) (III)

in denen Z die bereits angegebene Bedeutung besitzt und Hal Cl und/oder Br darstellt mit Hydroxyarylverbindungen der allgemeinen Formel (IV)

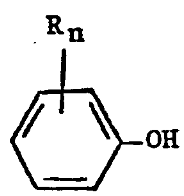

(IV)

mit den für R und n angegebenen Bedeutungen oder deren Mischungen in einem zweiphasigen Gemisch aus einem organischen Lösungsmittel und wäßriger Erdalkali- und/oder Alkalihydroxydlösung, das dadurch gekennzeichnet ist, daß man pro Mol Hydroxylarylverbindung 1 bis 1,3 Moläquivalente an Phosphorhalogenidverbindung und pro Äquivalent Phosphorhalogenidverbindung 1 bis 1,4 Äquivalente an Erdalkali- und/oder Alkalihydroxid einsetzt und bei Temperaturen zwischen 0 und 50°C die gesamte Menge Hydroxyarylverbindung mit 30 bis 95 Gew.-% der vorgesehenen Menge der Erdalkali- und/oder Alkalihydroxidmenge und 30 bis 95 Gew.-% der Menge an Phosphorhalogenidverbindung miteinander umsetzt und die verbleibenden 5—70 Gew.-% an Erdalkali- und/oder Alkalihydroxidlösung bzw. an Phosphorhalogenverbindung dann in einer oder mehreren einzelnen Zugaben zudosiert und anschließend umsetzt.

Als Phosphoroxyhalogenid wird bei dem erfindungsgemäßen Verfahren bevorzugt Phosphoroxychlorid eingesetzt. Auch die Verwendung von Phosphorpentahalogeniden, bevorzugt Phosphorpentachlorid, ist möglich. Weiter einsetzbar in das efindungsgemäße Verfahren sind auch Phosphorsäuremonoesterdihalogenide oder Phosphorsäurediesterhalogenide, wie sie beispielsweise durch Reaktion

von Phosphoroxyhalogeniden mit einem Unterschuß einer organischen Hydroxyverbindung erhalten werden können. Als Beispiele seien genannt: Phosphorsäuremonobutylesterdichlorid, Phosphorsäure-mono-2-äthylhexylesterdichlorid und Phosphorsäurediphenylestermonochlorid. Allgemein können als Esterreste Alkylgruppen mit 1 bis 20 bevorzugt 1 bis 12 C-Atome, eingesetzt werden. Weiterhin ist es möglich, als Veresterungskomponente Hydroxyarylverbindungen der Formel (IV) einzusetzten.

Reaktionspartner für die genannten Phosphorverbindungen sind nach dem erfindungsgemäßen Verfahren Hydroxyarylverbindungen der allgemeinen Formel (IV)

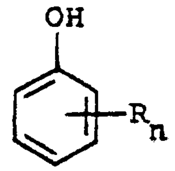

(IV)

in der

R für ein Wasserstoffatom, einen Alkylrest mit 1 bis 20, bevorzugt 1 bis 12 Kohlenstoffatomen, einen Alkoxyrest mit 1 bis 20, bevorzugt 1 bis 4 Kohlenstoffatomen, einen Phenoxyrest, einen Phenylrest, der gegebenenfalls anneliert ist, einen Rest $—COOR_1$, in dem $R_1$ eine Alkyl-gruppe mit 1 bis 20 Kohlenstoffatomen darstellt, eine Nitrilgruppe oder ein Halogenatom (Cl, Br, F) steht und

n für eine ganze Zahl zwischen 1 und 5 steht und die Reste R gleich oder verschieden sein können.

Diese Verbindungen können allein oder auch in beliebigen Mischungen miteinander in das erfindungsgemäße Verfahren eingesetzt werden.

Geeignete Verbindungen sind beispielsweise: Phenol, o-, m- und p-Kresol, o-, m- und p-Isopropylphenol, o-, m- und p-Butylphenol, o-, m-, p-2-Äthylhexylphenol, o-, m- und p- Nonylphenol, 2-Äthoxyphenol, 4-Phenoxyphenol, 2-Phenylphenol, o- und p-Chlorphenol, o- und p-Bromphenol, Tribromphenol, $\alpha$-Naphthol oder 4-Hydroxybenzoesäuredodecylester. Die o-, m- und p-Verbindungen können allein oder in beliebiger Mischung miteinander verwendet werden.

Bei der Umsetzung werden, bezogen auf 1 Mol Hydroxyarylverbindung 1 bis 1,3 Moläquivalente, vorzugsweise 1 bis 1,2 Moläquivalente, Phosphorhalogenidverbindung verwendet, so daß beispielsweise 1 bis 1,3 Mol an Phosphoroxychlorid für 3 Mol Hydroxyarylverbindung eingesetzt werden.

Als wäßrige Erdalkali- und/oder Alkalihydroxydlösungen können Lithium-, Natrium, Kaliumhydroxyd, Calciumhydroxid oder Ammoniumhydroxidlösungen verwendet werden. Bevorzugt werden Alkalihydroxidlösungen eingesetzt. Besonders bevorzugt wird nach dem erfindungsgemäßen Verfahren eine wäßrige Natriumhydroxydlösung verwendet.

Die Erdalkali- und/oder Alkalihydroxydmenge beträgt 1 bis 1,4 Äquivalente, vorzugsweise 1 bis 1,2 Äquivalente pro Äquivalent Phosphorhalogenidverbindungen. Die Gehalte der wäßrigen Erdalkali- und/oder Alkalihydroxydlösungen an reinem Erdalkali- und/oder Alkalihydroxid können stark unterschiedlich sein, vorzugsweise werden Konzentrationen zwischen 5 und 50 Gew.-%, besonders bevorzugt zwischen 10 und 30 Gew.-%, gewählt. Während der gesamtem Umsetzung liegt der pH-Wert bevorzugt zwischen 7,5 und 13,5 und ist abhängig von der Acidität der verwendeten Hydroxyarylverbindung und des Erdalkali- und/oder Alkalihydroxydüberschusses.

Als organische Lösungsmittel werden mit Wasser nicht mischbare Verbindungen wie Benzol, Toluol, Xylol, Chlorbenzol, Dichlorbenzol, Methylenchlorid und Chloroform bevorzugt, wobei diese Auswahl keine Eingrenzung darstellt. Die verwendete Lösungsmittelmenge beträgt bevorzugt 30 bis 1500 Gew.-%, insbesondere 50 bis 1000 Gew.-%, bezogen auf die Phosphorhalogenverbindung (Ausgangsprodukt). Weniger als 30 Gew.-% Lösungsmittel, wie sie beispielsweise in der US—PS 1 837 176 verwendet werden, sollten vermieden werden, da sonst die Ausbeute zu stark erniedrigt wird.

Die Reaktionstemperatur sollte im Bereich von 0 bis 50°C, zum Zwecke einer guten technischen Handhabbarkeit vorzugsweise bei 10 bis 40°C liegen. Durch die niedrige Reaktionstemperatur werden meist wasserhelle Produkte erhalten, die ohne Destillation direkt ihrem Verwendungszweck zugeführt werden können.

Die für die Durchführung des erfindungsgemäßen Verfahrens erforderlichen Reaktionszeiten sind sehr kurz. In den meisten Fällen wird die Umsetzung in 5 bis 60 Minuten beendet sein.

Im allgemeinen ist die Mitverwendung von Katalysatoren bei dem erfindungsgemäßen Verfahren nicht erforderlich, da die Phosphorsäuretriester in ausgezeichneter Ausbeute erhalten werden und die Reaktionszeiten sehr kurz sind. In speziellen Fällen kann es evtl. von Vorteil sein, quartäre Ammonium- oder Phosphoniumverbindungen einzusetzen, welche in der Literatur unter der Bezeichnung Phasentransferkatalysatoren beschrieben sind. Beispiele für derartige Verbindungen sind Triäthylbenzylammoniumchlorid, Tetrabutylammoniumchlorid, Tetrabutylammoniumbromid, Methyltrioctylammoniumchlorid und Tributylhexadecylphosphoniumbromid. Pro Mol Hydroxyarylverbindung gelangen bevorzugt 0 bis 1 Mol Katalysator zum Einsatz.

Durch die dem erfindungsgemäßen Verfahren zugrundeliegende enge Auswahl der Reaktionskomponenten bezüglich Menge und Konzentration, insbesondere aber durch die zwei oder mehrstufige

Reaktionsführung wird die Ausbeute gegenüber dem Stand der Technik deutlich erhöht. Die zwei- oder mehrstufige Reaktionsführung ist für die zu erzielene hohe Ausbeute unbedingt erforderlich. Werden Analogversuche zur mehrstufigen Reaktion als Einstufenreaktion ausgeführt, ist die Ausbeute deutlich niedriger (vgl. Beispiel 2). Besonders überraschend ist, daß selbst bei Einsatz exakt molarer Mengen der Reaktionspartner Ausbeuten von über 92% an Phosphorsäuretriestern erhalten werden.

Die zwei- oder mehrstufige Reaktion wird so ausgeführt, daß die gesamte Menge Hydroxyarylverbindung zusammen mit 30 bis 95 Gew.-%, bevorzugt 50 bis 90 Gew.-%, der vorgesehenen Mengen der Erdalkali- und/oder Alkalihydroxide mit 30 bis 95 Gew.-%, bevorzugt 50 bis 90 Gew.-% der Phosphorhalogenverbindungen in Gegenwart des mit Wasser nicht mischbaren organischen Lösungsmittels unter hoher Turbulenz zur Reaktion gebracht wird. Die verbleibenden 5 bis 70 Gew.-%, bevorzugt 10 bis 50 Gew.-% an Erdalkali und/oder Alkalihydroxidlösung bzw. an Phosphorhalogenverbindung werden dann entweder in einer zweiten Stufe zur Reaktionsmischung zudosiert, so daß sich insgesamt eine zweistufige Reaktion ergibt oder aber sie werden in mehreren einzelnen Zugaben nachgegeben, so daß insgesamt eine mehrstufige Reaktion resultiert. In den meisten Fällen wird zur Erzielung einer Ausbeute von über 92% eine zweistufige Reaktion ausreichen. Aus ökonomischen Gesichtspunkten werden meistens nicht mehr als 5 Reaktionsstufen durchgeführt.

Das erfindungsgemäße Verfahren kann diskontinuierlich oder kontinuierlich ausgeführt werden.

Beim diskontinuierlichen Verfahren werden zunächst 30 bis 95 Gew.-% der Erdalkali- und/oder Alkalihydroxide mit der gesamten Menge der Hydroxyarylverbindung vorgelegt und dann 30 bis 95 Gew.-% der in organischen Lösungsmitteln gelösten Phosphorhalogenverbindungen unter starkem Rühren und guter Kühlung zugegeben. Anschließend werden die verbleibenden Mengen der Ausgangsprodukte getrennt nachdosiert.

Eine besonders geeignete Ausführungsart des kontinuierlichen Verfahrens sieht vor, daß die Umsetzung in zwei oder mehreren Umpumpreaktoren mit sich anschließender Nachreaktion in einem oder mehreren Rührkesseln durchgeführt wird. Die Umpumpreaktoren sind so ausgelegt, daß die Reaktionsmischung in turbulenter Strömung umgepumpt und gut gekühlt wird, was beispielsweise durch eine Kombination ausreichend dimensionierter Kreiselpumpen, Wärmetauscher und Strömungsrohre erreicht werden kann. In den ersten Umpumpreaktor werden 30 bis 95 Gew.-% der in einem organischen Lösungsmittel gelösten Phosphorhalogenverbindungen sowie das Gemisch von Hydroxyarylverbindungen mit 30 bis 95 Gew.-% der Erdalkali- und/oder Alkalihydroxide kontinuierlich eindosiert. Das den Umpumpreaktor verlassende Gemisch wird in einen zweiten Umpumpreaktor eingespeist, wo üblicherweise die restlichen Mengen der Ausgangsverbindungen getrennt zudosiert werden. Gegebenenfalls kann diese Restmenge auf mehrere hintereinander geschaltete Umpumpreaktoren verteilt werden. Nach der in einem oder mehreren Rührkesseln erfolgten Nachreaktion kann die organische Phase abgetrennt und aufgearbeitet werden.

Das kontinuierliche Verfahren kann auch in einer Rührkesselkaskade durchgeführt werden. Gegebenenfalls kann die Durchmischung in den Kesseln durch eine zusätzliche Umpumpung des Reaktionsgemisches verbessert werden.

### Vergleichsbeispiel 1

In einem mit Tropftrichter, Rührer und Thermometer versehenen Dreihalskolben wurden 324 g (3,0 Mol) Kresol (m:p=70:30) und 1200 g (3,0 Mol) 10%ige Natronlauge vorgelegt und gerührt. Zu dieser Lösung wurden unter guter Kühlung im Verlauf einer Stunde 161 g (1,05 Mol) Phosphoroxychlorid zugetropft, wobei die Temperatur auf 18 bis 21 °C gehalten wurde. Es wurde 1 Stunde bei 20 bis 23°C nachgerührt, mehrmals mit Toluol ausgeschüttelt und die organische Phase destilliert. Die Ausbeute an Trikresylphosphat betrug 225 g (61,1% der Theorie).

### Vergleichsbeispiel 2

In der in Vergleichsbeispiel 1 beschriebnen Apparatur wurden 324 g (3,0 Mol) Kresol (m:p=70:30), 511 g (3,0 Mol) 23,5%ige Natronlauge und 30 g Toluol vorgelegt und gerührt. Im Verlauf einer Stunde wurden unter starker Kühlung 153,5 g (1,0 Mol) Phosphoroxychlorid bei 0 bis 3°C zugetropft. Nach beendeter Zugabe wurde die Reaktionsmischung noch 3 Stunden auf 0 bis 3°C gehalten und anschließend mehrmals mit Toluol ausgeschüttelt. Nach Destillation wurden 267 g (72,6% der Theorie) an Trikresylphosphat erhalten.

### Vergleichsbeispiel 3

Vergleichsbeispiel 2 wurde wiederholt, die Reaktionstemperatur betrug jedoch 23 bis 28°C. Nach Destillation der organischen Phase wurden 246 g (66,8% der Theorie) an Trikresylphosphat erhalten.

### Beispiel 1

In der in Vergleichsbeispiel 1 beschriebenen Apparatur wurden unter Stickstoffatmosphäre 324 g (3,0 Mol) Kresol (m:p=70:30), 480 g (2,4 Mol) 20%ige Natronlauge und 100 g Toluol vorgelegt. Unter sehr starkem Rühren wurde die Lösung von 123 g (0,8 Mol) Phosphoroxychlorid in 300 g Toluol in 30 Minuten zugetropft, wobei die Reaktionstemperatur auf 23 bis 28°C gehalten wurde. Nach beendeter Zugabe wurden in 5 Minuten die Lösung von 30,7 g (0,2 Mol) Phosphoroxychlorid in 100 g Toluol sowie

120 g (0,6 Mol) 20%ige Natronlauge getrennt zugetropft. Man ließ anschließend 30 Minuten bei 25°C nachreagieren und trennte die organische Phase ab. Toluol und Reste nicht umgesetzten Kresols wurden im Vakuum abdestilliert. Als fast wasserheller Rückstand wurden 358 g (97,4% der Theorie) an Trikresylphosphat erhalten.

Beispiel 2

In der beschriebenen Apparatur wurden unter Stickstoffatmosphäre 324 g (3,0 Mol) Kresol 70/30, 600 g (3,0 Mol) 20%ige Natronlauge und 100 g Toluol vorgelegt. Unter sehr starkem Rühren wurde die Lösung von 153,5 g (1,0 Mol) Phosphoroxychlorid in 400 g Toluol in 30 Minuten bei 23 bis 28°C zugetropft. Nach beendeter Zugabe ließ man 30 Minuten bei 25°C nachreagieren und arbeitete wie in Beispiel 1 auf. Es wurden 323 g (87,8% der Theorie) an Trikresylphosphat erhalten.

Beispiel 3

In einen mit Kreiselpumpe und Wärmetauscher ausgestatteten Umpumpreaktor werden pro Stunde kontinuierlich die unte Stickstoffatmosphäre bereiteten Lösungen von 3,73 kg Kresol (m:p=70:30) in 5,52 kg 20%iger Natronlauge und 1,41 kg Phosphoroxychlorid in 4,6 kg Toluol eingespeist. Die mittlere Verweilzeit der in turbulente Strömung versetzten Reaktionsmischung beträgt 25' und die Reaktionstemperatur 25 bis 30°C. Das den Reaktor verlassende Produkt wird in einen zweiten Umpumpreaktor überführt, in den zusätzlich pro Stunde die Lösung von 0,36 kg Phosphoroxychlorid in 1,15 kg Toluol sowie, 1,38 kg 20%ige Natronlauge eindosiert werden. Die mittlere Verweilzeit im zweiten Reaktor beträgt 5'. Die Nachreaktion wird mit einer mittleren Verweilzeit von 20' bei 25°C in einem Rührkessel durchgeführt. Die wäßrige Phase wird abgetrennt und von der organischen Phase werden Toluol sowie geringe Mengen Restkresols abdestilliert. Als fast wasserheller Rückstand verbleiben 4,14 kg/h Trikresylphosphat (98,1% der Theorie).

Beispiele 4 bis 11

Die Ausführung dieser Beispiele erfolgte analog Beispiel 1

| Arom. Hydroxyverbindung | Phosphorsäureester | Reaktionsstufe I | Reaktionsstufe II | Ausbeute (%) |
|---|---|---|---|---|
| 4) Kresol (m:p = 70:30) | Trikresylphosphat | 3,0 Mol Kresol/2,6 Mol NaOH (20%), 0,8 Mol $POCl_3$/500 g Methylenchlorid | 0,6 Mol NaOH (20%), 0,25 Mol $POCl_3$/100 g Methylenchlorid | 98,5 |
| 5) " | " | 3,0 Mol Kresol /2,3 Mol NaOH (23%), 0,7 Mol $POCl_3$/400 g Toluol | 1,0 Mol NaOH (23%), 0,4 Mol $POCl_3$/200 g Toluol | 97,1 |
| 6) Phenol | Triphenylphosphat | 3,0 Mol Phenol/2,4 Mol NaOH (20%), 0,8 Mol $POCl_3$/500 g Toluol | 0,6 Mol NaOH (20%), 0,2 Mol $POCl_3$/100 g Toluol | 96,0 |
| 7) Phenol, Kresol | Diphenylkresylphosphat | 2,0 Mol Phenol, 1,0 Mol Kresol/2,5 Mol NaOH (20%), 0,8 Mol $POCl_3$/500 g Toluol | 0,6 Mol NaOH (20%), 0,2 Mol $POCl_3$/100 g Toluol | 96,5 |
| 8) m-Isopropylphenol | Tri-isopropylphenylphosphat | 3,0 Mol m-Isopropylphenol/2,5 Mol NaOH (20%), 0,8 Mol $POCl_3$/500 g Toluol | 0,6 Mol NaOH (20%), 0,2 Mol $POCl_3$/100 g Toluol | 94,9 |
| 9) Phenol, m-Isopropylphenol | Mono-isopropylphenyldiphenylphosphat | 2,0 Mol Phenol, 1,0 Mol m-Isopropylphenol/2,5 Mol NaOH (20 %), 0,8 Mol $POCl_3$/500 g Toluol | 0,6 Mol NaOH (20%), 0,2 Mol $POCl_3$/100 g Toluol | 95,8 |
| 10) Phenol, m-Isopropylphenol | Di-isopropylphenylphenylphosphat | 1,0 Mol Phenol, 2,0 Mol m-Isopropylphenol/2,5 Mol NaOH (20%), 0,8 Mol $POCl_3$/500 g Toluol | 0,6 Mol NaOH (20%), 0,2 Mol $POCl_3$/100 g Toluol | 95,9 |
| 11) Phenol | Diphenyl-2-äthylhexylphosphat | 2,0 Mol Phenol/1,6 Mol NaOH (20%), 0,8 Mol Phosphorsäure-2-äthylhexylester-dichlorid/500 g Toluol | 0,5 Mol NaOH (20%), 0,2 Mol Phosphorsäure-2-äthylhexylester-dichlorid/100 g Toluol | 97,0 |

**Patentansprüche**

1. Verfahren zur Herstellung von Phosphorsäuretriestern der allgemeinen Formel (I)

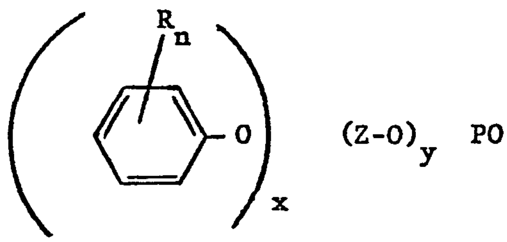

(I)

in der

R für ein Wasserstoffatom, einen Alkylrest mit 1—20, bevorzugt 1—12 Kohlenstoffatomen, einen Alkoxyrest mit 1—20, bevorzugt 1—4 Kohlenstoffatomen, einen Phenoxyrest, einen Phenylrest der gegebenenfalls annelliert ist, einen Rest —$COOR_1$, in dem $R_1$ eine Alkylgruppe mit 1—20 Kohlenstoffatomen darstellt, eine Nitrilgruppe oder ein Halogenatom (Cl, Br, F) steht,

n für eine ganze Zahl zwischen 1 und 5 steht und die Reste R gleich oder verschieden sein können,

x für eine ganze Zahl zwischen 1 und 3 steht,

Z für einen Alkylrest mit 1—20 Kohlenstoffatomen oder einen Rest der Formel

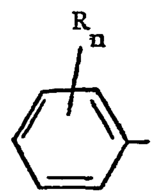

worin

R und n die obige Bedeutung aufweisen

und

y für 3—x steht,

durch Umsetzung von Phosphoroxyhalogeniden, Phosphorpentahalogeniden, Phosphorsäuremonoesterdihalogeniden oder Phosphorsäurediesterhalogeniden der Formel (II) bzw. (III)

$ZO\ PO\ Hal_2$ (II)    $(ZO)_2PO\ Hal$ (III)

in denen Z die bereits angegebene Bedeutung besitzt und Hal Cl und/oder Br darstellt mit Hydroxyarylverbindungen der allgemeinen Formel (IV)

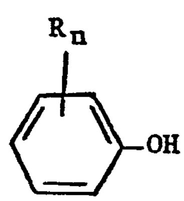

(IV)

mit den für R und n angegebenen Bedeutungen oder deren Mischungen in einem zweiphasigen Gemisch aus einem organischen Lösungsmittel und wäßriger Erdalkali- und/oder Alkalihydroxydlösung, das dadurch gekennzeichnet ist, daß man pro Mol Hydroxylarylverbindung 1 bis 1,3 Moläquivalente an Phosphorhalogenidverbindung und pro Äquivalent Phosphorhalogenidverbindung 1 bis 1,4 Äquivalente an Erdalkali- und/oder Alkalihydroxid einsetzt und bei Temperaturen zwischen 0 und 50°C die gesamte Menge Hydroxyarylverbindung mit 30 bis 95 Gew.-% der vorgesehenen Menge der Erdalkali- und/oder Alkalihydroxidmenge und 30 bis 95 Gew.-% der Menge an Phosphorhalogenidverbindung miteinander umsetzt und die verbleibenden 5—70 Gew.-% an Erdalkali- und/oder Alkalihydroxidlösung bzw. an Phosphorhalogenverbindung dann in einer oder mehreren einzelnen Zugaben zudosiert und anschließend umsetzt.

2. Verfahren nach Anspruch 1, dadurch gekennzeichnet, daß die Umsetzung bei Temperaturen zwischen 10 bis 40°C durchgeführt wird.

3. Verfahren nach Ansprüchen 1 und 2, dadurch gekennzeichnet, daß Phosphoroxychlorid oder 2-Äthylhexylphosphorsäuredichlorid eingesetzt wird.

4. Verfahren nach Ansprüchen 1 bis 3, dadurch gekennzeichnet, daß eine Erdalkali- und/oder Alkalihydroxidlösung in einer Konzentration zwischen 5 und 50 Gew.-%, eingesetzt wird.

5. Neutrale Phosphorsäureester hergestellt nach einem Verfahren der Ansprüche 1 bis 4.

## Claims

1. Process for the production of phosphoric acid triesters of the general formula (I)

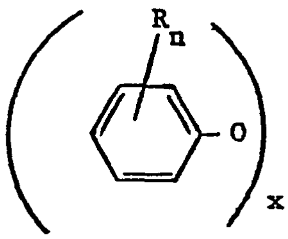 $(Z\text{-}O)_y$ PO (I)

in which

R represents a hydrogen atom, an alkyl radical containing 1—20, preferably 1—12 carbon atoms, an alkoxy radical containing 1—20, preferably 1—4 carbon atoms, a phenoxy radical, an optionally fused phenyl radical, a radical of the formula —$COOR_1$, in which $R_1$ represents an alkyl group containing 1—20 carbon atoms, a nitrile group or a halogen atom (Cl, Br, F),

n represents an integer between 1 and 5 and the radicals R may be the same or different,

x represents an integer between 1 and 3,

Z represents an alkyl radical containing 1—20 carbon atoms or a radical of the formula

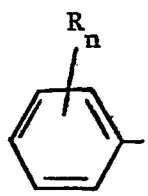

wherein

R and n have the above meaning and

y represents 3—x,

by reacting phosphorus oxyhalides, phosphorus pentahalides, phosphoric acid monoester dihalides or phosphoric acid diester halides of the formula (II) or (III)

$ZO\ PO\ Hal_2$ (II) $(ZO)_2PO\ Hal$ (III)

in which

Z has the meaning already given and

Hal represents Cl and/or Br

with hydroxyaryl compounds of the general formula (IV)

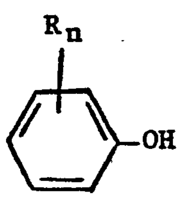 (IV)

wherein

R and n have the meanings given

or mixtures thereof in a two-phase mixture of an organic solvent and an aqueous alkaline earth metal and/or alkali metal hydroxide solution, which process is characterised in that 1 to 1.3 mole equivalents of phosphorus halide compound are used per mole of hydroxyaryl compound and 1 to 1.4 equivalents of alkaline earth metal and/or alkali metal hydroxide are used per equivalent of phosphorus halide compound and at temperatures between 0 and 50°C the total quantity of hydroxyaryl compound, 30 to 95% by weight of the prescribed quantity of alkaline earth metal and/or alkali metal hydroxide and 30 to 95% by weight of the quantity of phosphorus halide compound are reacted with one another and the remaining 5—70% by weight of alkaline earth metal and/or alkali metal hydroxide solution and of

phosphorus halogen compound are then added in one or more individual portions and then reacted.

2. Process according to Claim 1, characterised in that the reaction is carried out at temperatures between 10 and 40°C.

3. Process according to Claims 1 and 2, characterised in that phosphorus oxychloride or 2-ethylhexyl phosphoric acid dichloride is used.

4. Process according to Claims 1 to 3, characterised in that an alkaline earth metal and/or alkali metal hydroxide solution having a concentration between 5 and 50% by weight is used.

5. Neutral phosphoric acid esters when produced by the process of Claims 1 to 4.

**Revendications**

1. Procédé de production de triesters de l'acide phosphorique de formule générale (I):

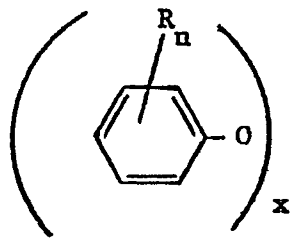

$(Z\text{-}O)_y$ PO (I)

dans laquelle

R représente un atome d'hydrogène, un radical alkyle ayant 1 à 20, de préférence 1 à 12 atomes de carbone, un radical alcoxy ayant 1 à 20, de préférence 1 à 4, atomes de carbone, un radical phénoxy, un radical phényle éventuellement condensé, un radical —$COOR_1$ dans lequel $R_1$ représente un groupe alkyle ayant 1 à 20 atomes de carbone, un groupe nitrile ou un atome d'halogène (Cl, Br, F);

n est un nombre entier valant 1 à 5, et les radicaux R peuvent être identiques ou différents;

x est un nombre entier valant 1 à 3;

Z est un radical alkyle ayant 1 à 20 atomes de carbone ou un radical de formule

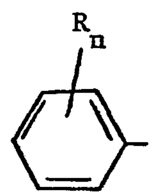

où

R et n ont le sens précité, et

y vaut 3-x,

par réaction d'oxyhalogénures de phosphore, de pentahalogénures de phosphore, de dihalogénures de monoesters de l'acide phosphorique ou d'halogénures de diesters de l'acide phosphorique de formule (II) ou (III)

$$ZO\ PO\ Hal_2 \qquad (ZO)_2PO\ Hal$$

(II) (III)

dans lesquelles Z a le sens déjà indiqué et Hal représente Cl et/ou Br avec des composés hydroxyaryliques de formule générale (IV):

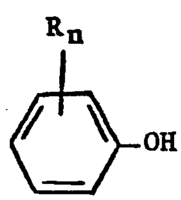

(IV)

dans laquelle R et n ont les sens indiqués ou leurs mélanges, dans un mélange en deux phases formé d'un solvant organique et d'une solution aqueuse d'un hydroxyde alcalino-terreux et/ou alcalin, procédé caractérisé en ce qu'on utilise par mole du composé hydroxyarylique 1 à 1,3 équivalent molaire de composé halogéné du phosphore et, par équivalent de composé halogéné du phosphore 1 à 1,4 équivalent d'hydroxyde alcalino-terreux et/ou alcalin, et l'on fait réagir à des températures comprises entre

0 et 50°C les uns avec les autres la quantité totale du composé hydroxyarylique avec 30 à 95% en poids de la quantité prévue de l'hydroxyde alcalino-terreux et/ou alcalin et avec 30 à 95% en poids de la quantité du composé halogéné du phosphore, et l'on ajoute ensuite en quantité dosée, en une ou plusieurs additions individuelles, et l'on fait ensuite réagir les 5 à 70% restants de la solution d'hydroxyde alcalino-terreux et/ou alcalin ou du composé halogéné du phosphore.

2. Procédé selon la revendication 1, caractérisé en ce que l'on effectue la réaction à des températures comprises entre 10 et 40°C.

3. Procédé selon les revendications 1 et 2, caractérisé en ce qu'on utilise l'oxychlorure de phosphore ou le dichlorure de l'acide 2-éthyl-hexyl-phosphorique.

4. Procédé selon les revendications 1 à 3, caractérisé en ce qu'on utilise une solution d'hydroxyde alcalino-terreux et/ou alcalin en une concentration comprise entre 5 et 50% en poids.

5. Ester neutre de l'acide phosphorique produit par un procédé selon les revendications 1 à 4.